# EUROPEAN PATENT SPECIFICATION

(11) **EP 1 975 472 B1**
(45) Date of publication and mention of the grant of the patent: **16.05.2012**
(21) Application number: 07006173.4
(22) Date of filing: 26.03.2007
(51) Int. Cl.: F16H 61/30

(54) **Mechanical shift servo reduction**
Mechanische Schalt-Servoreduktion
Servo-réduction de changement de vitesses mécanique

(43) Date of publication of application: 01.10.2008
(73) Proprietor: Kongsberg Automotive AS, 3601 Kongsberg (NO)
(72) Inventor: Norheim, Daniel, 3612 Kongsberg (NO)
(74) Representative: UEXKÜLL & STOLBERG

(56) References cited:
- EP-A- 1 632 697
- DE-A1- 2 927 666
- DE-A1- 3 410 802
- DE-A1-102004 056 609

## Description

The present invention relates to a gear shift system comprising a shift lever, a gearbox, a servo mechanism, a medium for transferring shift commands from the shift lever to the servo mechanism and a reducing mechanism, wherein a shift command is transferred by the medium to a gearbox shaft, said servo mechanism is controlled by a servo valve, and the servo valve is controlled by the reducing mechanism arranged to transfer movement of the medium for transferring shift commands to the servo valve.

Manual shifting systems for heavy vehicles are commonly equipped with a servo mechanism to provide assistance force allowing the driver to shift gears easily. Implementing an assistance force increases the total force on the gear shift system substantially. Thus, there is an enhanced risk of damaging the gear box by applying an excessive force. Especially, the synchronisation rings will be damaged if they are exposed to an exceedingly high total force.

A manual shifting system equipped with a servo mechanism to provide assistance force according to the preamble of claim 1 is described in DE 2927666. The shifting system described therein comprises a reducing mechanism to limit the assistance force.

There are mechanisms or devices known as servo reducer in the prior art providing solutions to the mentioned problem by reducing the assistance force and the total force in the gear box. Such a servo reducer is described in WO 2005/119100, where the total force on the shift lever is held constant or where it is reduced when the force on the shift lever exceeds a predefined threshold value. On the one hand a very good gear box protection and a comfortable gear lever handling is provided. On the other hand the solution described involves additional valves for regulating the pressure in a servo cylinder and is rather complex and expensive regarding the production costs and size.

US 6,851,350 presents an actuating pneumatic cylinder with a piston provided with non-return valves in combination with external solenoid valves to prevent an unintended release of a clutch.

Documents WO 00/14437 and WO 2005/022007 describe assisted gear shift systems with a reducing mechanism controlling the assistance pressure supplied.

Most of these known solutions have the drawback of a more or less complex external reducing mechanism, which is expensive regarding the production costs and size. Known and less complex solutions only limit the assistance force to a maximal value providing a weak gearbox protection against further application of a high manual force to the gear lever.

The object of the present invention is to achieve a simple, less costly and more space saving servo reducing mechanism in an assisted gear shift system for providing a high gear box protection without introducing a large number of additional parts or new valves.

According to the present invention the reducing mechanism is arranged to decouple servo valve and the medium for transferring shift commands when the applied force on the shift lever exceeds a threshold value. The servo valve is closed at high forces exceeding a threshold value. The servo assistance force is hence reduced and mainly the manual force on the shift lever applied by the driver will remain acting on the gearbox. The total force, which is defined as the sum of assistance force and manual force applied by the driver and dominated by the assistance force during normal operation, is strongly and swiftly decreased in the instance of an exceedingly high manual force leading to a strong reduction of the servo assistance force.

Preferably, the reducing mechanism is purely mechanic. In such a mechanical embodiment the reducing mechanism is arranged between the lever arm and servo valve units of a manual shifting system equipped with a servo mechanism similar to that described in DE 2927666.

Commonly, the type of the servo valve(s) is a check valve that allows an air flow from an air pressure supply to a servo cylinder. To assist gear shift commands from both forward and backward shift lever movements the servo cylinder comprises commonly two active chambers separated by a piston that is prepared for receiving air pressure from either the one or the other chamber and transferring the force from the air pressure in either direction as the assistance force to the gearbox shaft by a bidirectional movement. In such a gear shift system it is sensible to control the air flow from the air pressure supply to each chamber of the servo cylinder with a servo valve. As the two servo valves act in this case corresponding to the chambers in the servo cylinder in opposition to each other, it is further sensible to arrange the servo valves in opposition to each other in a mirror symmetric arrangement and in mechanical communication with each other. This arrangement has the advantage that only one medium for transferring shift commands from the shift lever to the servo valves is necessary.

In the invention the reducing mechanism comprises a control ring and a control lever in mechanical contact. Preferably, both the control ring and the control lever are pivotably connected to a valve actuation lever that acts as the medium for transferring shift commands from the shift lever to the servo valves. The control ring is connected pivotably around a control ring pivot axis to the valve actuation lever biasing at two opposite contact portions with its outer ring surface directly or via a steep connections against the valve bodies such that pivoting results in actuating or closing of the one or the other servo valve. As the valve actuation lever is itself arranged pivotably around an actuation lever pivot axis the pivoting of the control ring can conduct around the control ring pivot axis and/or the actuation lever pivot axis. Preferably, the control ring comprises on the opposite side of the pivotal connection to the servo actuation lever a groove that engages one first end portion of the control lever. The control lever with a first end portion and a second end portion is itself connected pivotably around a control lever pivot axis between the end portion to the servo actuation lever such that the first end portion engaged by the groove in the control ring is released from the groove at a certain degree of deflexion relative to the servo actuation lever. The control lever pivot axis can also be identical to the actuation lever pivot axis and the control lever can therefore also be connected pivotably to means used as the actuation lever pivot axis. As long as the first end portion of the control lever is engaged by the groove in the control ring a pivotal movement of the control lever relative to the servo actuation lever coincides with a pivotal movement of the control ring around the control ring pivot axis. The second end portion of the control lever is also pivotable around the control lever pivot axis. Two loaded control springs abutting against opposite lugs of the servo actuation lever bias from one and the other pivot direction against the second end portion of the control lever. The control lever is therefore spring loaded into both pivot directions.

As long as the manual force on the shift lever transferred to the servo actuation lever is normal, i.e. below a threshold value, the first end of the control lever engaged by the groove of the control ring prevents a pivoting of the control ring relative to the servo actuation lever around the control ring pivot axis. The control ring pivots in coincidence with the servo actuation lever around the servo actuation lever pivot axis. This pivotal movement actuates the one or the other servo valve via the contact portion on its outer ring surface.

The one or the other servo valve is opened gradually as the manual force on the shift lever that is transferred to the servo valve via the medium increases. Therefore, the assistance force increases correspondingly with the applied manual force on the shift lever as long as the manual force is normal, i.e. below a threshold value.

When the manual force has reached a certain value that is large enough to open the servo valves up to a determined degree of maximum opening, the pivoting of the control ring around the servo actuation lever pivot axis is limited by means fixed to the chassis. These means can be a rod or a bar arranged to protrude into the ring opening and limiting the pivot movement when contact with the inner ring surface is made. One could also think of limiting lugs or flanges engaging the control ring at a maximal degree of deflexion.

When the state of maximum opening is reached the one or the other servo valve does not open further when the manual force applied to the shift lever is further increased. The servo assistance force has therefore reached a maximum value. As the pivotal movement of the control ring is limited it can not follow a further pivotal movement of the servo actuation lever induced by a further increased manual force on the shift lever. This results in a countercheck force imposed by the limiting means on the control ring to pivot around the control ring axis relative to the servo actuation lever. This force is transmitted to the control lever via the engaged first end portion in the groove of the control ring to pivot around the control lever axis. As the second end portion is spring loaded into both pivot directions the transferred force is countered by the spring forces of the control springs. When the manual force applied to the shift lever increases further such that the transferred force larger enough to overcome the spring forces of the control springs a concerted pivot movement of both the control ring and the control lever around the control ring pivot axis and the control lever pivot axis, respectively, relative to the servo actuation lever is performed. The part of the first end portion that is engaged by the groove in the control ring decreases when the degree of deflexion of this concerted pivot movement increases.

The circular paths of the first end portion and the groove of the control ring relative to the servo actuation lever branch out. When the manual force applied to the shift lever is increased above a threshold value the concerted pivot movement relative to the servo actuation lever reaches a degree of deflexion when the first end portion of the control lever is completely released off the groove of the control ring and the frictional contact force between control ring and control lever falls down abruptly. The servo valve and the medium for transferring shift commands, i.e. the servo actuation lever, are decoupled in the moment when the applied force on the shift lever exceeds the threshold value. The control ring is then almost free to pivot around the control ring pivot axis. The fully opened servo valve that is under full spring load then draws back the almost freely pivotable control ring via the contact portions on the outer ring surface such that the servo valve closes immediately.

In normal operation the gear shift action takes place on application of a normal manual force below the threshold value. Application of a higher manual force leads to a strongly reduced total force that is transmitted to the gearbox in order to protect it.

A preferred, non-limiting embodiment of the present invention will now be described in more detail with references to the accompanying drawings, where:
Figure 1 is a perspective view of the reduction mechanism of the gear shift system.
Figure 2 is cross-sectional side view of the reduction mechanism of the gear shift system.
Figure 3 is a front view of the reduction mechanism of the gear shift system.
Figures 4 to 8 are front views of the reduction mechanism of the gear shift system in different stages of movement and with different forces applied to the shift lever:
Figure 9 is graph showing the force transmitted to the gear box as a function of the force applied to the shift lever by the driver.

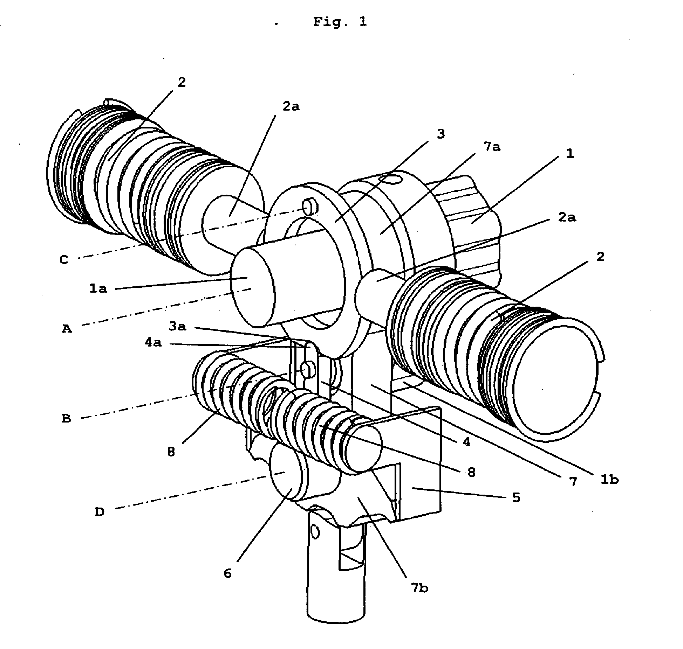

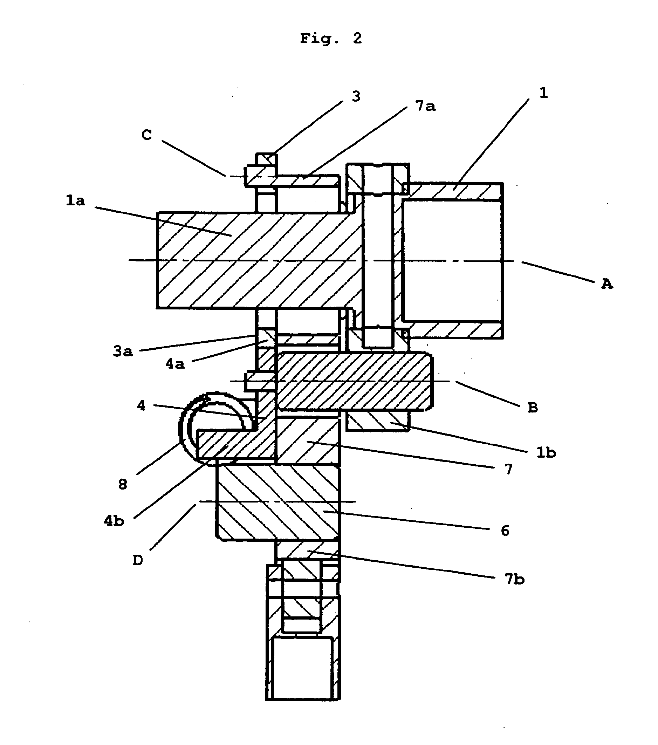

Figure 1 to 3 give an impression of a mechanical reduction mechanism of the gear shift system in a perspective view, a cross-sectional side view and a front view. Two servo valves 2 of servo assistance system (not shown) are each connected one of two chambers in an air pressure servo cylinder. Opening and closing of the servo valves 2 controls the servo assistance force in the one or the other direction of a gear shift command from the shift lever connection point 6 to the gear box (not shown). The manual force on the shift lever connection point 6 is transmitted to the gear box via a servo actuation lever 7 to the gearbox shaft 1 that transfers movement to the gear box. The servo actuation lever 7 is pivotably connected to the servo actuation lever axis B such that two portions 7a and 7b of the servo actuation lever 7 extend from the axis B. One portion of the servo actuation lever 7 extending from the servo actuation lever axis B comprises a lug 7a that frames an appendix 1a of the gearbox shaft 1. The servo actuation lever axis B is rotatably arranged to the gearbox shaft 1 by means of an inner lever 1b. The manual force applied to the shift lever connection point 6 is therefore transmitted to the gearbox shaft 1 via the inner lever 1b. It is important to note that there is some significant play between the gearbox shaft appendix 1a and the lug of the servo actuation lever 7. This play allows a limited pivotal movement of the servo actuation lever 7 around the servo actuation lever axis B when a manual force is applied to the shift lever connection point 6 that is coupled with the other portion 7b of the servo actuation lever 7. The reducing mechanism comprises a control ring 3 and a control lever 4. The control ring is connected coaxially to the lug 7a of servo actuation lever 7 with its centre located in neutral gear position on the fixed gearbox shaft axis A. The control ring comprises a pivot connection to the lug 7a of the servo actuation lever 7 yielding a control ring axis C that allows a pivotal movement of the control ring 3 relative to the servo actuation lever 7. In parallel to the servo actuation lever 7 the control lever 4 is pivotably connected to the servo actuation lever axis B such that two portions of the control lever 4 extend from the axis B. There is no fixed connection between control lever 4 and servo actuation lever 7 such that a relative pivotal movement is possible. One end portion 4a of the control lever 4 is engaged by a frictional contact with a groove 3a in control ring 3. The groove 3a is arranged in the control ring 3 opposing the pivot connection yielding control ring axis C. As long as the end portion 4a of the control lever 4 is in frictional contact with the groove 3a in the control ring 3 the control ring 3 and the control lever 4 can perform a pivotal movement relative to the servo actuation lever 7 in a concerted manner. Two control springs 8 fixed to lugs 5 of the servo assistance lever 7 bias in opposite directions against the other end portion 4b of the control lever 4. Thereby, the control springs 8 work against the concerted pivotal movement relative to the servo actuation lever 7 of the control ring 3 and the control lever 4. It is an important feature of the control ring 3 that its outer diameter is larger than the outer diameter of the lug 7a of the servo assistance lever 7 such that the outer control ring surface is in abutting contact with appendices 2a of the servo valves 2 to serve as a cam. The inner diameter is larger than the diameter of the gearbox shaft appendix 1a that is fed through both the lug of servo assistance lever 7 and the control ring 3.

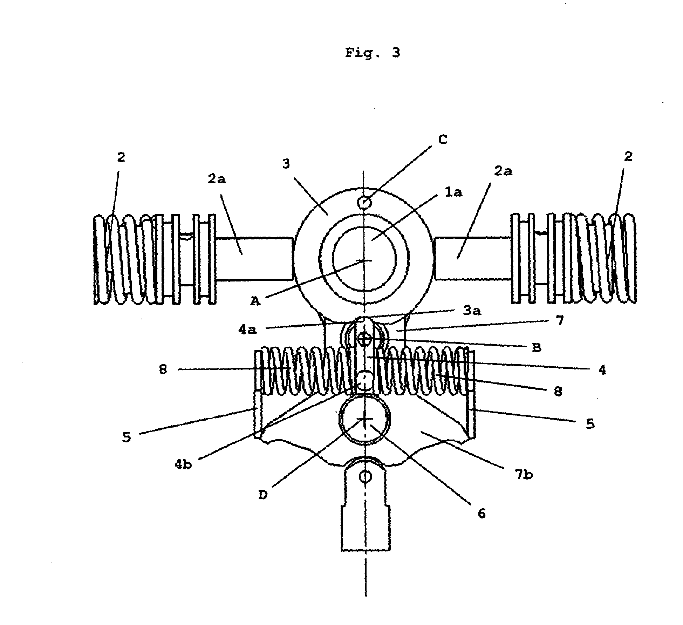

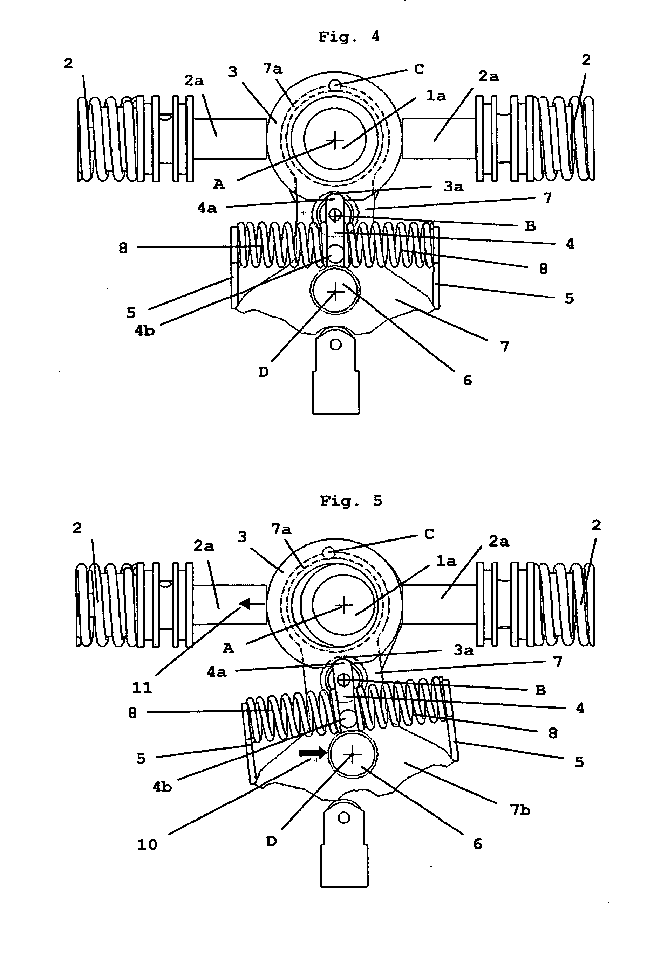

Figure 4 shows the initial position of the reduction mechanism of the gear shift system as it is shown in figure 3. In addition, the position of the lug 7a of the servo assistance lever 7 is illustrated in dashed lines.

In figures 5 to 8 it is assumed that a high resistance in the gear box, e.g. a stuck gear, prevents a rotation of the gearbox shaft 1 and a rotation of servo actuation lever axis B around gearbox shaft axis A by means of a pivotal movement of inner lever 1a. Axis B is therefore shown stationary with respect to fixed gearbox shaft axis A.

In figure 5 a normal manual force 10 is applied to the shift lever connection point 6 resulting in a pivotal movement of the servo assistance lever 7 around the servo assistance lever axis B. As a portion of the outer control ring surface biases against one servo valve appendix 2a the servo valve opens gradually with the pivotal movement of the control ring 3 around the servo assistance lever axis B due to the force applied to the shift lever connection point 6. Therefore, the assistance force increases gradually with the manual force applied to the shift lever connection point 6.

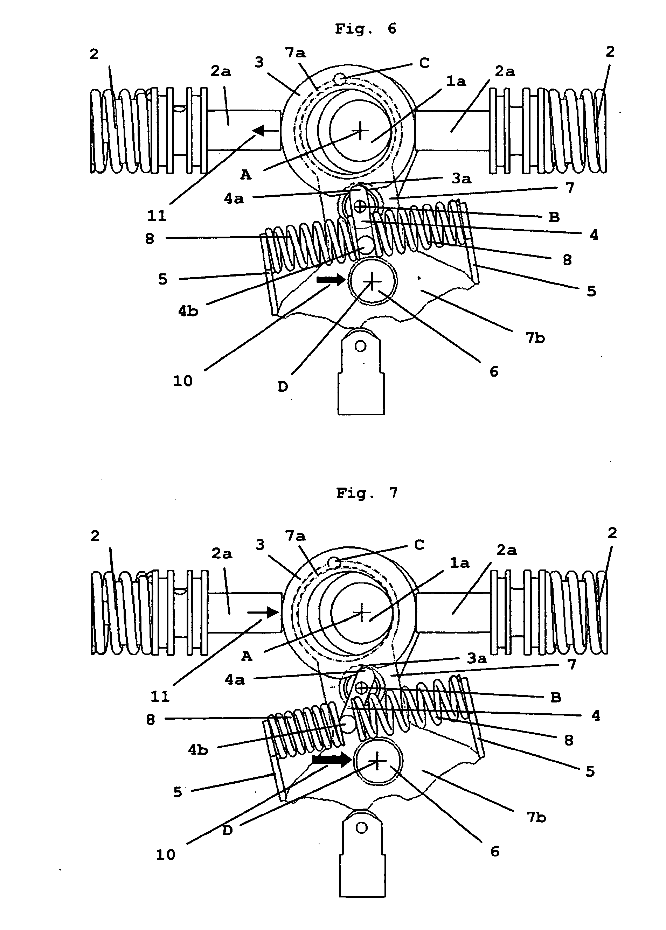

In figure 6 the manual force on the shift lever connection point 6 is further increased such that the control ring 3 touches with a portion of its inner surface the gearbox shaft appendix protruding through the lug of the servo assistance lever and the control ring. This is the point of maximal opening of the servo valve 2 and consequently the point of maximal assistance force.

A further increase of the manual force on the shift lever connection point 6 as shown in figure 7 does not result in an increase of assistance force but in a concerted pivotal movement relative to the servo actuation lever 7 of the control ring 3 and the control lever 4. As the inner diameter of the lug 7a of the servo assistance lever 7 is larger than the inner diameter of the control ring 3, the manual force transferred to the contact point at the control ring axis C and its reaction force at the contact point of the control ring 3 with the gearbox shaft appendix 1a form a pure moment that results in a pivotal movement relative to the servo actuation lever 7 of the control ring 3 around the control ring axis C. The control lever 4 pivots accordingly around the servo assistance lever axis B due to the frictional contact between the control ring 3 and the control lever 4. The manual force must be large enough to overcome the force applied to the end portion 4b of the control lever by the control springs 8. The circular paths of the end portion 4a and the groove 3a of the control ring 3 relative to the servo actuation lever 7 branch out. As it is shown in figure 7 the manual force applied to the shift lever connection point 6 has reached a threshold value such that the concerted pivot movement relative to the servo actuation lever 7 reaches a degree of deflexion when the end portion 4a of the control lever 4 is completely released off the groove 3a of the control ring 3 and the frictional contact force between control ring 3 and control lever 4 falls down abruptly. The servo valves 2 and the servo actuation lever 7 are decoupled in the moment when the applied force on the shift lever connection point 6 exceeds the threshold value. The spring force of the opened servo valve 2 draws back the control ring 3 and closes.

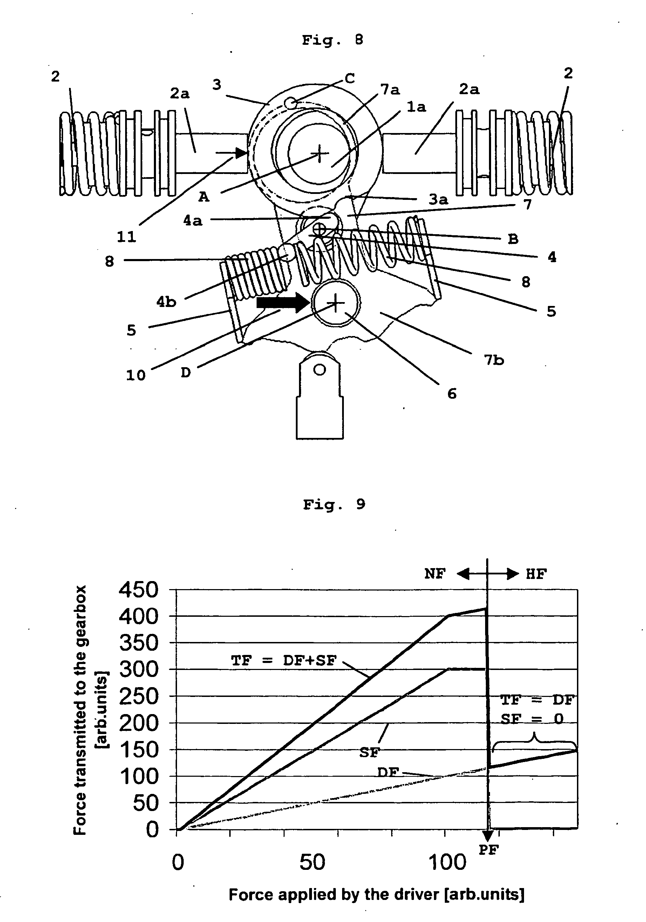

Figure 8 shows that the spring force of the servo valve 2 has drawn back the control ring 3 completely and the servo valve appendix 2 touches the lug 7a of the servo actuation lever 7. The servo valve 2 is closed in this moment and the assistance force is therefore switched off to protect the gear box from further force effects that could damage the gear box. The manual force that is still transferred to the gear box is about factors lower than the assistance force and safe to apply without any assistance force.

Figure 9 illustrates the forces transmitted to the gear box as a function of the force applied by the driver to the shift lever. As long as the manual force DF is normal and below a threshold value the assistance force SF increases proportionally with an increase of the manual force DF. The total force TF transmitted to the gear box is the sum of manual force DF and assistance force SF that is typically factors higher than the manual force DF. A maximal assistance force SF is reached when the control ring 3 touches the gearbox shaft appendix 1a and the servo valve 2 is open to its maximum. A further increase of the manual force DF is necessary to overcome the force of the control springs 8 in order to release the reducing mechanism. When the threshold value PF is reached the frictional contact between the control ring 3 and the control lever 4 falls down abruptly and the servo valve 2 closes. The assistance force SF is switched off in this moment and the total force TF that is transmitted to the gear box is the manual force DF only.

## Claims

1. A gear shift system comprising a shift lever, a gearbox, a servo mechanism, a medium for transferring shift commands from the shift lever to said servo mechanism and a reducing mechanism, wherein a shift command is transferred by said medium to a gearbox shaft (1), said servo mechanism is controlled by a servo valve (2), and the servo valve (2) is controlled by the reducing mechanism arranged to transfer movement of the medium for transferring shift commands to the servo valve (2),
wherein said reducing mechanism is arranged to decouple servo valve (2) and the medium for transferring shift commands when the applied force on the shift lever exceeds a threshold value,
**characterised in that**
said reducing mechanism comprises a control ring (3) and a control lever (4) in mechanical contact, wherein said control lever (4) is spring loaded so that mechanical contact to the control ring (3) is released when the applied force on the shift lever exceeds a threshold value.

2. A gear shift system according to claim 1, wherein said reducing mechanism is mechanical.

3. A gear shift system according to any of the preceding claims, wherein said servo valve (2) is spring loaded to close when servo valve (2) and the medium for transferring shift commands are decoupled.

4. A gear shift system according to claim 3, wherein said control ring (3) is in mechanical communication with the servo valve (2) by a pivotal movement of the control ring (3) actuating the servo valve (2).

5. A gear shift system according to claim 1, wherein said servo valve (2) is spring loaded to close when mechanical contact between the control lever (4) and the control ring (3) is released.

## Patentansprüche

1. Gangschaltsystem mit einem Schalthebel, einem Getriebe, einem Servomechanismus, einem Medium zum Übertragen von Schaltbefehlen von dem Schalthebel zu dem Servomechanismus und mit einem Reduziermechanismus, wobei ein Schaltbefehl durch das Medium zu einer Getriebewelle (1) übertragen wird, wobei der Servomechanismus durch ein Servoventil (2) gesteuert wird und wobei das Servoventil (2) durch den Reduziermechanismus gesteuert wird, der so ausgestaltet ist, um Bewegung des Mediums zum Übertragen von Schaltbefehlen zu dem Servoventil (2) zu übertragen,
wobei der Reduziermechanismus dazu ausgestaltet ist, das Servoventil (2) und das Medium zum Übertragen von Schaltbefehlen zu entkoppeln, wenn die auf den Schalthebel ausgeübte Kraft einen Schwellenwert überschreitet,
**dadurch gekennzeichnet, dass**
der Reduziermechanismus einen Steuerring (3) und einen Steuerhebel (4) in mechanischem Kontakt aufweist, wobei der Steuerhebel (4) federbelasted ist, so dass mechanischer Kontakt mit dem Steuerring (3) aufgehoben wird, wenn die auf den Schalthebel ausgeübt Kraft einen Schwellenwert überschreitet.

2. Gangschaltsystem nach Anspruch 1, wobei der Reduziermechanismus mechanisch ist.

3. Gangschaltsystem nach einem der vorhergehenden Ansprüche, wobei das Servoventil (2) federbelasted ist, um geschlossen zu werden, wenn das Servoventil (2) und das Medium zum
Übertragen von Schaltbefehlen entkoppelt werden.

4. Gangschaltsystem nach Anspruch 3, wobei der Steuerring (3) in mechanischer Verbindung mit dem Servoventil (2) durch eine Schwenkbewegung des Steuerrings (3), der das Servoventil (2) bestätigt, ist.

5. Gangschaltsystem nach Anspruch 1, wobei das Servoventil (2) federbelasted ist, um geschlossen zu werden, wenn mechanischer Kontakt zwischen dem Steuerhebel (4) und dem Steuerring (3) aufgehoben wird.

## Revendications

1. Système de changement de vitesse comprenant un levier de changement de vitesse, une boîte de vitesses, un servomécanisme, un milieu permettant de transférer des commandes de changement de vitesse du levier de changement de vitesse audit servomécanisme et un mécanisme de réduction, dans lequel une commande de changement de vitesse est transférée par ledit milieu à un arbre de transmission (1), ledit servomécanisme est commandé par une servosoupape (2), et ladite servosoupape (2) est commandée par le mécanisme de réduction agencé pour transférer un déplacement du milieu permettant de transférer des commandes de changement de vitesse à la servosoupape (2),
dans lequel ledit mécanisme de réduction est agencé pour découpler ladite servosoupape (2) et le milieu permettant de transférer des commandes de changement de vitesse lorsque la force appliquée au levier de changement de vitesse dépasse une valeur de seuil,
**caractérisé en ce que**,
ledit mécanisme de réduction comprend une bague de commande (3) et un levier de commande (4) en contact mécanique, dans lequel ledit levier de commande (4) est contraint par ressort de façon à libérer le contact mécanique avec la bague de commande (3) lorsque la force appliquée au levier de changement de vitesse dépasse une valeur de seuil.

2. Système de changement de vitesse selon la revendication 1, dans lequel ledit mécanisme de réduction est mécanique.

3. Système de changement de vitesse selon l'une quelconque des revendications précédentes, dans lequel ladite servosoupape (2) est contrainte par ressort pour se fermer lorsque la servosoupape (2) et le milieu permettant de transférer des commandes de changement de vitesse sont découplés.

4. Système de changement de vitesse selon la revendication 3, dans lequel ladite bague de commande (3) communique mécaniquement avec la servosoupape (2) par un mouvement pivotant de la bague de commande (3) actionnant la servosoupape (2).

5. Système de changement de vitesse selon la revendication 1, dans lequel ladite servosoupape (2) est contrainte par ressort pour se fermer lors de la libération du contact mécanique entre le levier de commande (4) et la bague de commande (3).
